# EUROPEAN PATENT APPLICATION

(11) **EP 3 804 566 A1**
(43) Date of publication of application: **14.04.2021**
(21) Application number: 18931901.5
(22) Date of filing: 25.09.2018
(51) Int. Cl.: A47B 88/44

(54) **BUFFER SLIDING RAIL DRIVING FRICTION MUFFLING MECHANISM**

(30) Priority: 25.08.2018 CN 201810976435
(71) Applicant: Guangdong SACA Precision Manufacturing Co., Ltd., Foshan, Guangdong 528311 (CN)
(72) Inventor: CAI, Gengxi, Foshan, Guangdong 528311 (CN); WU, Yitai, Taiwan 300 (CN); LUN, Kaicheng, Foshan, Guangdong 528200 (CN)
(74) Representative: Kurig, Thomas
(86) International application number: PCT/CN2018/107346
(87) International publication number: WO 2020/042260

(57) **Abstract**

The present invention provides a buffer slide rail with a dynamic friction silencing mechanism, comprising an upper rail, a middle rail and a lower rail which are in sliding connection in sequence, wherein a transmission lower bead nest in transmission connection with the middle rail is assembled on the lower rail, and a transmission upper bead nest in transmission connection with the upper rail is assembled on the middle rail, characterized in that a dynamic friction silencing assembly for reducing an axial moving speed is arranged between the connection of the upper rail and the middle rail, the dynamic friction silencing assembly including an abrasion-resistant connecting block and a rolling connecting block, wherein the rolling connecting block comes into contact with the abrasion-resistant connecting block as the upper rail axially moves and is in rolling connection with the abrasion-resistant connecting block. The structure is simple, to increase a coefficient of dynamic friction between the upper rail and the middle rail, reduce an axial moving speed of the upper rail, achieve a silencing effect, as well as ensure that the upper rail and the middle rail are opened or closed on the lower rail in sequence, improve the transmission stability of the slide rail, and guarantee the normal use of a drawer.

## Description

### Technical Field

The present invention relates to the field of slide rails, particularly to a buffer slide rail with a dynamic friction silencing mechanism.

### Background

Because of being installed on a side surface of a drawer in general, being easy in installation and saving space, a slide rail is widely applied to transmission and connecting components of furniture and industrial production, especially a three-section slide rail. A traditional three-section slide rail comprises an upper rail, a middle rail and a lower rail which are embedded in sequence, wherein the upper rail is installed on a drawer, the lower rail is installed on a cabinet, and the middle rail, as a bearing rail, is in sliding connection between the upper rail and the lower rail, to extend a moving range of the drawer and enable the upper rail and the middle rail to slide back and forth with respect to the lower rail in a axial direction of the lower rail.

In the process, in order to make transmission smoother, a transmission lower bead nest in transmission connection with the middle rail may be assembled on the lower rail, and a transmission upper bead nest in transmission connection with the upper rail may be assembled on the middle rail.

However, in an actual operation, due to different forces of pushing and pulling the slide rail, the axial moving speed of the upper rail and the middle rail is caused to be too fast, so that the upper rail and the middle rail cannot be opened or closed on the lower rail in sequence, specifically as follows: the upper rail slides out before the middle rail during opening and the middle rail is reset and closed before the upper rail during closing, so that the middle rail is easy to deform under the action of a large moment during opening or closing, meanwhile, a loud noise is made due to a collision between limit stops for limiting the transmission upper bead nest in the middle rail and the upper rail, the stability of transmission is reduced, even the slide rail is damaged, causing the slide rail to fail, affecting the normal use of a drawer.

### Summary

### Technical Problem

An object of the present invention is to overcome the defect in the prior art and provide a buffer slide rail with a dynamic friction silencing mechanism. The structure of the buffer slide rail is simple, to increase a coefficient of dynamic friction between an upper rail and a middle rail, reduce an axial moving speed of the upper rail, achieve a silencing effect, as well as ensure that the upper rail and the middle rail are opened or closed on a lower rail in sequence, improve the transmission stability of the slide rail, and guarantee the normal use of a drawer.

### Solution to Problem

### Technical Solution

The object of the present invention is realized by following technical solution: a buffer slide rail with a dynamic friction silencing mechanism, comprising an upper rail, a middle rail and a lower rail which are in sliding connection in sequence, wherein a transmission lower bead nest in transmission connection with the middle rail is assembled on the lower rail, and a transmission upper bead nest in transmission connection with the upper rail is assembled on the middle rail, wherein a dynamic friction silencing assembly for reducing an axial moving speed is arranged between the connection of the upper rail and the middle rail, the dynamic friction silencing assembly including an abrasion-resistant connecting block and a rolling connecting block, wherein the rolling connecting block comes into contact with the abrasion-resistant connecting block as the upper rail axially moves and is in rolling connection with the abrasion-resistant connecting block.

According to above optimization, the abrasion-resistant connecting block is located between the connection of the transmission upper bead nest and is fixedly assembled on a bottom surface of the upper rail, a mounting base in shaft connection with the rolling connecting block is assembled on an upper surface of the middle rail, and the rolling connecting block comes into soft contact with the abrasion-resistant connecting block as the upper rail axially moves and is in rolling connection with the abrasion-resistant connecting block under the action of dynamic friction of the abrasion-resistant connecting block.

Alternatively, the abrasion-resistant connecting block is located between the sliding connection of the transmission upper bead nest and is assembled on an upper surface of the middle rail, a mounting base in shaft connection with the rolling connecting block is assembled on a bottom surface of the upper rail, and the rolling connecting block comes into soft contact with the abrasion-resistant connecting block as the upper rail axially moves and is in rolling connection with the abrasion-resistant connecting block under the action of dynamic friction of the abrasion-resistant connecting block.

Alternatively, the abrasion-resistant connecting block is located between the sliding connection of the transmission upper bead nest and is assembled on a left inner side surface or right inner side surface of the upper rail, a mounting base in shaft connection with the rolling connecting block is assembled in the middle rail, and the rolling connecting block comes into soft contact with the abrasion-resistant connecting block as the upper rail axially moves and is in rolling connection with the abrasion-resistant connecting block under the action of dynamic friction of the abrasion-resistant connecting block.

According to above optimization, the abrasion-resistant connecting block is provided with a plurality of arc slots, the plurality of arc slots being distributed on the abrasion-resistant connecting block, and arc bumps which are in rolling connection with the arc slots as the upper rail moves are provided at an outer edge of the rolling connecting block.

According to above optimization, the plurality of arc slots are distributed on a plane at one side of the abrasion-resistant connecting block at equal interval, so that the plane at one side of the abrasion-resistant connecting block has a wavy connecting plane.

According to above optimization, the abrasion-resistant connecting block is at least one plate-shaped soft abrasion-resistant sheet.

According to above optimization, the arc bumps are distributed at the outer edge of the rolling connecting block at equal radian by taking the center of the rolling connecting block as a fixed point, so that the rolling connecting block is a petaloid rolling block used for rolling connection with the arc slots.

According to above optimization, a shaft hole is formed in the center of the rolling connecting block, and a locating shaft in shaft connection with the mounting base is installed in the shaft hole.

According to above optimization, outer side surfaces of the rolling connecting block are separately provided with limit concave holes for increasing coefficients of dynamic friction, and the mounting base is provided with limit bumps slidably engaged or disengaged from the limit concave holes.

### Advantageous Effects of Invention

### Advantageous Effects

The present invention has the advantages that: the abrasion-resistant connecting block and the rolling connecting block of the dynamic friction silencing assembly are used, during the opening or closing of the slide rail, the rolling connecting block comes into contact with the abrasion-resistant connecting block as the upper rail axially moves and is in rolling connecting with the abrasion-resistant connecting block, to increase a coefficient of dynamic friction between the upper rail and the middle rail, reduce the axial moving speed of the upper rail, achieve a silencing effect, as well as ensure that the upper rail and the middle rail are opened or closed on the lower rail in sequence, improve the transmission stability of the slide rail, and guarantee the normal use of a drawer.

### Brief Description of Drawings

### Description of Drawings

Fig. 1 is a structural schematic diagram of embodiment 1 of the present invention.
Fig. 2 is a sectional view of embodiment 1 of the present invention.
Fig. 3 is a partial enlarged view of Fig. 2 in embodiment 1 of the present invention.
Fig. 4 is an installation diagram of the rolling connecting block, the abrasion-resistant connecting block and the mounting base in embodiment 1 of the present invention.
Fig. 5 is an exploded view of the rolling connecting block, the abrasion-resistant connecting block and the mounting base in embodiment 1 of the present invention.
Fig. 6 is a sectional view of embodiment 2 of the present invention.
Fig. 7 is a partial enlarged view of Fig. 6 in embodiment 2 of the present invention.
Fig. 8 is a sectional view of embodiment 3 of the present invention.
Fig. 9 is a partial enlarged view of Fig. 8 in embodiment 3 of the present invention.

### Optimal Embodiments for Implementing Invention

### Best Mode

The present invention will be further described as below with reference to the drawings.

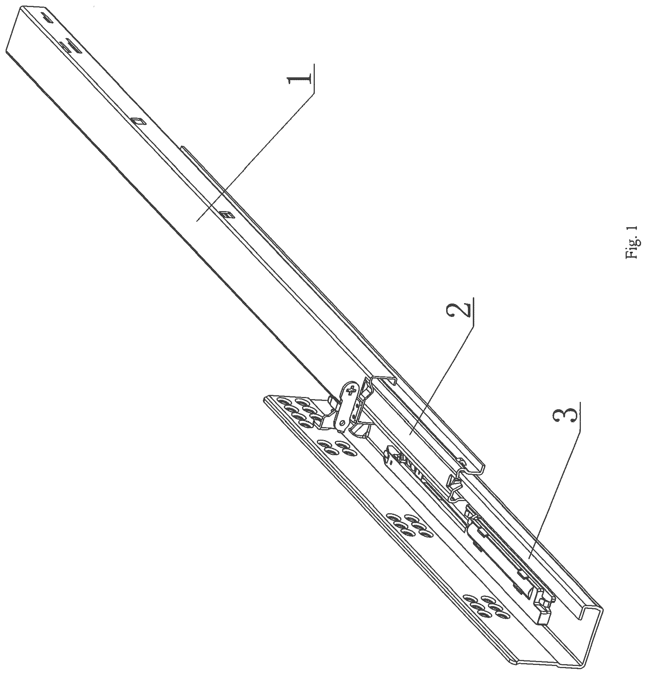

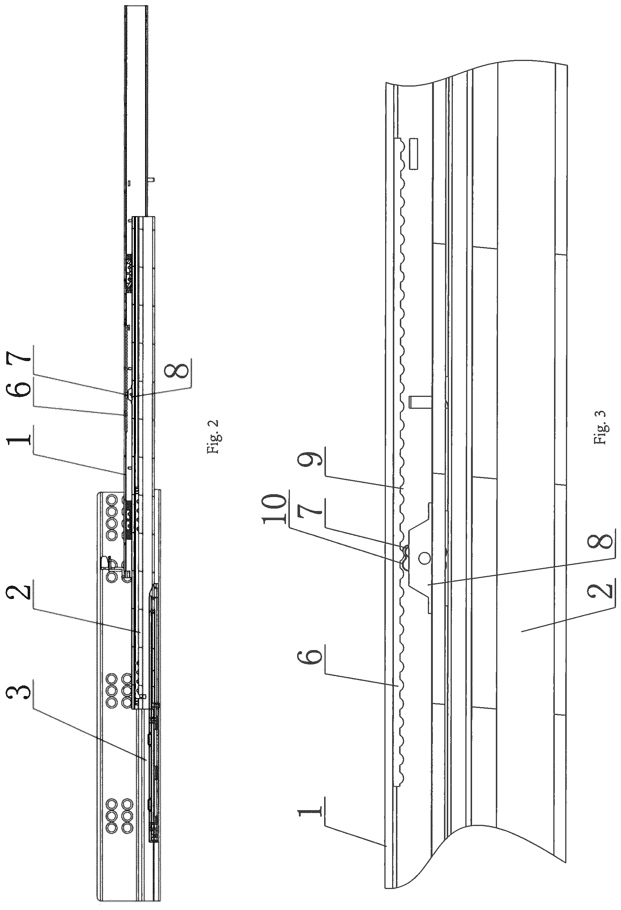

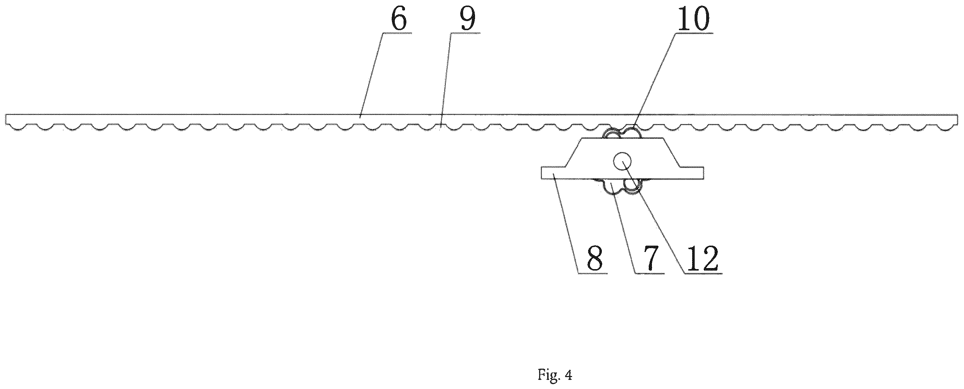

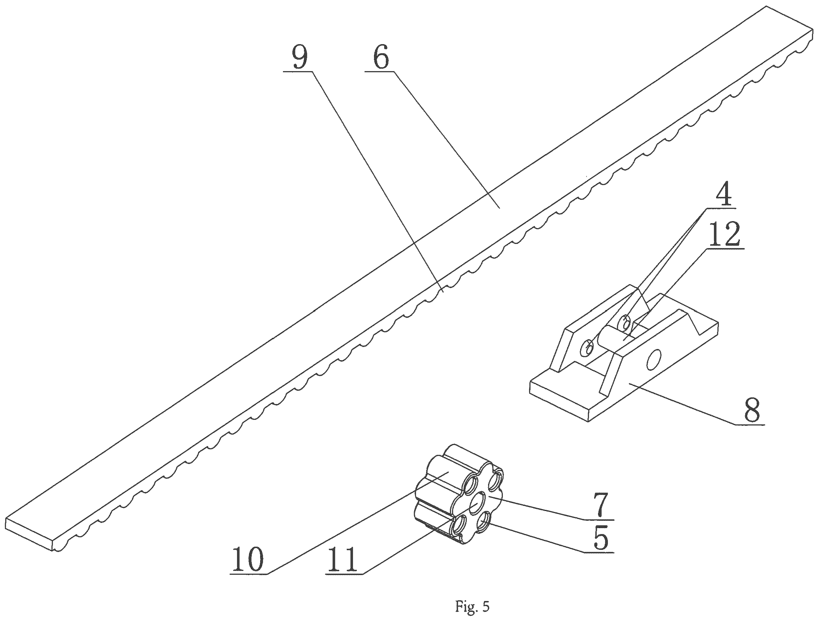

As shown in Fig. 1-Fig. 9, a buffer slide rail with a dynamic friction silencing mechanism of the present invention, comprising an upper rail 1, a middle rail 2 and a lower rail 3 which are in sliding connection in sequence, wherein a transmission lower bead nest in transmission connection with the middle rail 2 is assembled on the lower rail 3, and a transmission upper bead nest in transmission connection with the upper rail 1 is assembled on the middle rail 2, wherein a dynamic friction silencing assembly for reducing an axial moving speed is arranged between the connection of the upper rail 1 and the middle rail 2. The dynamic friction silencing assembly includes an abrasion-resistant connecting block 6 and a rolling connecting block 7, wherein the rolling connecting block 7 comes into contact with the abrasion-resistant connecting block 6 as the upper rail 1 axially moves and is in rolling connection with the abrasion-resistant connecting block 6.

As shown in Fig. 1-Fig. 5, the abrasion-resistant connecting block 6 is located between the connection of the transmission upper bead nest and is fixedly assembled on a bottom surface of the upper rail 1, a mounting base 8 in shaft connection with the rolling connecting block 7 is assembled on an upper surface of the middle rail 2, and the rolling connecting block 7 comes into soft contact with the abrasion-resistant connecting block 6 as the upper rail 1 axially moves and is in rolling connection with the abrasion-resistant connecting block 6 under the action of dynamic friction of the abrasion-resistant connecting block 6.

That is, during the opening or closing of the slide rail, the abrasion-resistant connecting block 6 comes into contact with the rolling connecting block 7 as the upper rail 1 axially moves. Meanwhile, driven by the abrasion-resistant connecting block 6, the rolling connecting block 7 rolls on the mounting base 8 and moves relatively along the abrasion-resistant connecting block 6, to generate dynamic friction resistance between the upper rail 1 and the middle rail 2, reduce an axial moving speed of the upper rail 1 effectively, achieve a silencing effect, as well as ensure that the upper rail 1 and the middle rail 2 are opened or closed on the lower rail 3 in sequence, improve the transmission stability of the slide rail, and guarantee the normal use of a drawer.

Wherein, the abrasion-resistant connecting block 6 is provided with a plurality of arc slots 9, the plurality of arc slots 9 being distributed on the abrasion-resistant connecting block 6, and arc bumps 10 which are in rolling connection with the arc slots 9 as the upper rail 1 moves are provided at an outer edge of the rolling connecting block 7. In practical application, the abrasion-resistant connecting block 6 is at least one plate-shaped soft abrasion-resistant sheet. Moreover, the plurality of arc slots 9 are distributed on a plane at one side of the abrasion-resistant connecting block 6 at equal interval, so that the plane at one side of the abrasion-resistant connecting block 6 has a wavy connecting plane. The arc bumps 10 are distributed at the outer edge of the rolling connecting block 7 at equal radian by taking the center of the rolling connecting block 7 as a fixed point, so that the rolling connecting block 7 is a petaloid rolling block used for rolling connection with the arc slots 9.

In this way, by means of the soft contact and rolling connection between the abrasion-resistant connecting block 6 with a wavy connecting plane and the petaloid rolling block, the dynamic friction area is enlarged, to increase a coefficient of dynamic friction between the upper rail 1 and the middle rail 2, reduce an axial moving speed, achieve a silencing effect, as well as ensure that the upper rail 1 and the middle rail 2 are opened or closed on the lower rail 3 in sequence, improve the transmission stability of the slide rail, and guarantee the normal use of a drawer.

In addition, a shaft hole 11 is formed in the center of the rolling connecting block 7, and a locating shaft 12 in shaft connection with the mounting base 8 is installed in the shaft hole 11. The smoothness and stability of operation are effectively improved, and the quality in use of the slide rail is guaranteed.

As shown in Fig. 1-Fig. 5, outer side surfaces of the rolling connecting block 7 are separately provided with limit concave holes 4 for increasing coefficients of dynamic friction, and the mounting base 8 is provided with limit bumps 5 slidably engaged or disengaged from the limit concave holes 4.

During opening or closing of the slide rail, as the upper rail 1 moves, the rolling connecting block 7 rolls on the mounting base 8 under the action of dynamic friction resistance, and the limit concave holes 4 are slidably engaged with the limit bumps 5 as the rolling connecting block 7 rolls. Then, under the pull of sufficient external force, the limit holes 4 are disengaged from the limit bumps 5, so that the slide rail is continuously opened or closed, to increase dynamic friction force, as well as ensure that the upper rail 1 and the middle rail 2 are opened or closed on the lower rail 3 in sequence, improve the transmission stability of the slide rail, and guarantee the normal use of a drawer.

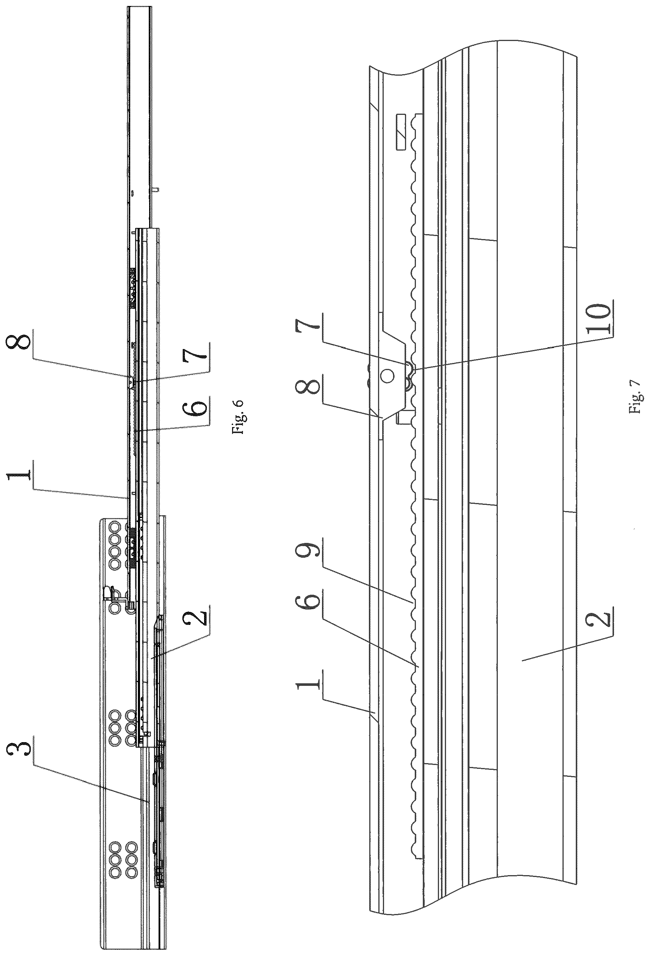

As shown in Fig. 6-Fig. 7, embodiment 2 is different from the above-mentioned embodiment in that: the abrasion-resistant connecting block 6 is located between the sliding connection of the transmission upper bead nest and is assembled on an upper surface of the middle rail 2, a mounting base 8 in shaft connection with the rolling connecting block 7 is assembled on a bottom surface of the upper rail 1, and the rolling connecting block 7 comes into soft contact with the abrasion-resistant connecting block 6 as the upper rail 1 axially moves and is in rolling connection with the abrasion-resistant connecting block 6 under the action of dynamic friction of the abrasion-resistant connecting block 6.

During the opening or closing of the slide rail, the rolling connecting block 7 comes into soft contact with the abrasion-resistant connecting block 6 as the upper rail 1 axially moves. Meanwhile, the rolling connecting block 7 rolls on the mounting base 8 and moves relatively along the abrasion-resistant connecting block 6, to generate dynamic friction resistance between the upper rail 1 and the middle rail 2, reduce an axial moving speed of the upper rail 1 effectively, achieve a silencing effect, as well as ensure that the upper rail 1 and the middle rail 2 are opened or closed on the lower rail 3 in sequence, improve the transmission stability of the slide rail, and guarantee the normal use of a drawer.

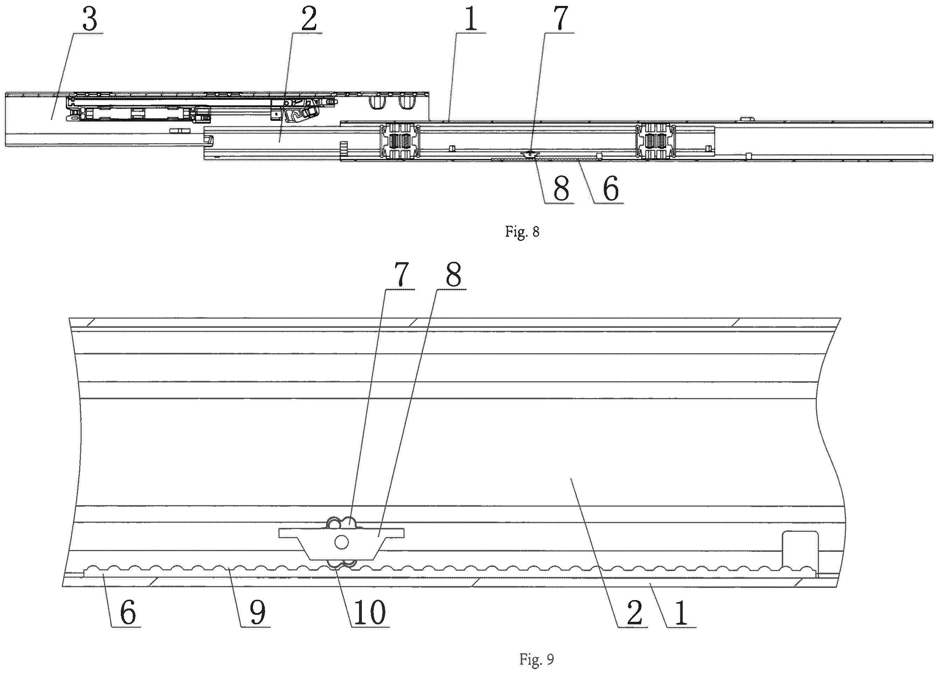

As shown in Fig. 8-Fig. 9, embodiment 3 is different from the above-mentioned embodiment in that: the abrasion-resistant connecting block 6 is located between the sliding connection of the transmission upper bead nest and is assembled on a left inner side surface or right inner side surface of the upper rail 1, a mounting base 8 in shaft connection with the rolling connecting block 7 is assembled in the middle rail 2, and the rolling connecting block 7 comes into soft contact with the abrasion-resistant connecting block 6 as the upper rail 1 axially moves and is in rolling connection with the abrasion-resistant connecting block 6 under the action of dynamic friction of the abrasion-resistant connecting block 6.

During the opening or closing of the slide rail, the abrasion-resistant connecting block 6 comes into soft contact with the rolling connecting block 7 as the upper rail 1 axially moves. Meanwhile, driven by the abrasion-resistant connecting block 6, the rolling connecting block 7 rolls on the mounting base 8 and moves relatively along the abrasion-resistant connecting block 6, to generate dynamic friction resistance between the upper rail 1 and the middle rail 2, reduce the axial moving speed of the upper rail 1 effectively, achieve a silencing effect, as well as ensure that the upper rail 1 and the middle rail 2 are opened or closed on the lower rail 3 in sequence, improve the transmission stability of the slide rail, and guarantee the normal use of a drawer.

It is worth noting that optionally, the abrasion-resistant connecting block 6 may be an abrasion-resistant block made of nonmetal abrasion-resistant material, such as abrasion-resistant plastic block, abrasion-resistant silicone block or the like, and optionally, the rolling connecting block 7 may be a rolling block made of metal material or a rolling block made of nonmetal material, such as iron rolling block, steel rolling block, colloid rolling block or the like.

The above specific embodiments are specific embodiments with good effects of the present invention. Any structure identical or similar to that of the buffer slide rail with a dynamic friction silencing mechanism of present invention shall be covered in the protection scope of the present invention.

## Claims

1. A buffer slide rail with a dynamic friction silencing mechanism, comprising an upper rail (1), a middle rail (2) and a lower rail (3) which are in sliding connection in sequence, wherein a transmission lower bead nest in transmission connection with the middle rail (2) is assembled on the lower rail (3), and a transmission upper bead nest in transmission connection with the upper rail (1) is assembled on the middle rail (2), **characterized in that** a dynamic friction silencing assembly for reducing an axial moving speed is arranged between the connection of the upper rail (1) and the middle rail (2), the dynamic friction silencing assembly including an abrasion-resistant connecting block (6) and a rolling connecting block (7), wherein the rolling connecting block (7) comes into contact with the abrasion-resistant connecting block (6) as the upper rail (1) axially moves and is in rolling connection with the abrasion-resistant connecting block (6).

2. The buffer slide rail with a dynamic friction silencing mechanism according to claim 1, **characterized in that** the abrasion-resistant connecting block (6) is located between the connection of the transmission upper bead nest and is fixedly assembled on a bottom surface of the upper rail (1), a mounting base (8) in shaft connection with the rolling connecting block (7) is assembled on an upper surface of the middle rail (2), and the rolling connecting block (7) comes into soft contact with the abrasion-resistant connecting block (6) as the upper rail (1) axially moves and is in rolling connection with the abrasion-resistant connecting block (6) under the action of dynamic friction of the abrasion-resistant connecting block (6).

3. The buffer slide rail with a dynamic friction silencing mechanism according to claim 1, **characterized in that** the abrasion-resistant connecting block (6) is located between the sliding connection of the transmission upper bead nest and is assembled on an upper surface of the middle rail (2), a mounting base (8) in shaft connection with the rolling connecting block (7) is assembled on a bottom surface of the upper rail (1), and the rolling connecting block (7) comes into soft contact with the abrasion-resistant connecting block (6) as the upper rail (1) axially moves and is in rolling connection with the abrasion-resistant connecting block (6) under the action of dynamic friction of the abrasion-resistant connecting block (6).

4. The buffer slide rail with a dynamic friction silencing mechanism according to claim 1, **characterized in that** the abrasion-resistant connecting block (6) is located between the sliding connection of the transmission upper bead nest and is assembled on a left inner side surface or right inner side surface of the upper rail (1), a mounting base (8) in shaft connection with the rolling connecting block (7) is assembled in the middle rail (2), and the rolling connecting block (7) comes into soft contact with the abrasion-resistant connecting block (6) as the upper rail (1) axially moves and is in rolling connection with the abrasion-resistant connecting block (6) under the action of dynamic friction of the abrasion-resistant connecting block (6).

5. The buffer slide rail with a dynamic friction silencing mechanism according to any one of claims 1-4, **characterized in that** the abrasion-resistant connecting block (6) is provided with a plurality of arc slots (9), the plurality of arc slots (9) being distributed on the abrasion-resistant connecting block (6), and arc bumps (10) which are in rolling connection with the arc slots (9) as the upper rail (1) moves are provided at an outer edge of the rolling connecting block (7).

6. The buffer slide rail with a dynamic friction silencing mechanism according to claim 5, **characterized in that** the plurality of arc slots (9) are distributed on a plane at one side of the abrasion-resistant connecting block (6) at equal interval, so that the plane at one side of the abrasion-resistant connecting block (6) has a wavy connecting plane.

7. The buffer slide rail with a dynamic friction silencing mechanism according to claim 6, **characterized in that** the abrasion-resistant connecting block (6) is at least one plate-shaped soft abrasion-resistant sheet.

8. The buffer slide rail with a dynamic friction silencing mechanism according to claim 5, **characterized in that** the arc bumps (10) are distributed at the outer edge of the rolling connecting block (7) at equal radian by taking the center of the rolling connecting block (7) as a fixed point, so that the rolling connecting block (7) is a petaloid rolling block used for rolling connection with the arc slots (9).

9. The buffer slide rail with a dynamic friction silencing mechanism according to claims 2-4, **characterized in that** a shaft hole (11) is formed in the center of the rolling connecting block (7), and a locating shaft (12) in shaft connection with the mounting base (8) is installed in the shaft hole (11).

10. The buffer slide rail with a dynamic friction silencing mechanism according to claim 9, **characterized in that** outer side surfaces of the rolling connecting block (7) are separately provided with limit concave holes (4) for increasing coefficients of dynamic friction, and the mounting base (8) is provided with limit bumps (5) slidably engaged or disengaged from the limit concave holes (4).
